# EUROPEAN PATENT APPLICATION

(11) **EP 3 748 565 A1**
(43) Date of publication of application: **09.12.2020**
(21) Application number: 19184545.2
(22) Date of filing: 04.07.2019
(51) Int. Cl.: G06Q 30/06

(54) **ENVIRONMENT TRACKING**

(30) Priority: 05.06.2019 US 201916432692
(71) Applicant: Inokyo, Inc., San Francisco, CA 94110 (US)
(72) Inventor: REMSUDEEN, Rameez, San Francisco, CA California 94105 (US); BRIGDEN, Ryan, Menlo Park, CA California 94025 (US); FRANCIS, Tony, Exton, PA Pennsylvania 19341 (US)
(74) Representative: K2 IP Limited

(57) **Abstract**

Methods, systems, and devices are provided for tracking an environment. According to one aspect, the system can obtain perception data from one or more perception capture hardware devices and one or more perception programs. The system can detect a plurality of objects from the perception data. The system can identify an object classification of each of the plurality of objects and track each object of the plurality of objects in the environment. The system can identify one or more temporal events in the environment. The system can associate one or more events based on the object classifications of each of the plurality of objects, the one or more temporal events, the tracking of each object of the plurality of objects in the environment, or a combination thereof.

## Description

### BACKGROUND

Object tracking within an environment is a challenging technical problem. Within a controlled physical environment, such as on an assembly line, the problem is relatively constrained. In contrast, tracking objects within a complex, dynamic, and/or freeform environment can be more challenging. This is particularly the case where the tracked objects can be interacted by humans in a relatively arbitrary manner. Examples of such dynamic environments include warehouses, shops, and libraries, where objects such as physical stock can be moved around by employees and/or potential purchasers or borrowers, where each person can move around differently as well as move physical stock around the environment differently.

The relatively challenging nature of this technical problem means that humans are commonly employed to manage and maintain an inventory within such dynamic environments. In such cases, the inventory can include items that are viewed, moved around, or taken by people within the environment. Inventory is generally stored in a fixed area inside the environment. People can physically enter the fixed area, browse through various items, and select those of interest. Some form of item tracking or sales area is typically staffed by humans who physically process and check out items from the environment. Another form of item tracking is typically done by humans to make sure items moved are returned to an orderly state and to keep the dynamic physical environment secure from theft or mismanagement of items in the environment. Systems and methods to improve object tracking within such environments have been attempted. One method, used in shops for example, is to allow a user to use a machine to scan items that the user has selected within the environment. For example, in a retail situation, the user scans selected items at an automatic checkout machine, generally placed near the entrance of the retail store.

Improved object tracking within a complex and/or dynamic environment is desirable.

### BRIEF SUMMARY

The present disclosure relates generally to systems and methods for tracking an environment.

In one aspect, a computer-implemented method for tracking an environment can include obtaining perception data from one or more perception capture hardware devices and one or more perception programs. The method can include detecting a plurality of objects from the perception data, identifying an object classification of each of the plurality of objects, identifying one or more temporal events in the environment, tracking each object of the plurality of objects in the environment, associating one or more events based on the object classifications of each of the plurality of objects, the one or more temporal events, the tracking of each object of the plurality of objects in the environment, or a combination thereof.

The method for object tracking can improve accuracy, reduce error rates, and increase efficiency in tracking items in a dynamic environment.

In one aspect, the method can include receiving user input by an application, the application configured to associate the user entering, browsing, leaving, or a combination thereof, with conducting a shopping session including the user checking into the environment to initiate the shopping session and the user checking out of the environment having obtained one or more stock keeping units and concluding the shopping session.

In one aspect, the method can include localizing each object in 3D space of the environment. The method can include receiving a plurality of data on one or more users, detecting one or more users in the environment, and associating a new profile or an existing profile with each of the one or more users based on the plurality of data on the one or more users. The method can also include localizing each user's geographic location of the one or more uses in a 3D space of the environment.

In one aspect, detecting a plurality of objects is performed at least in part by a first machine learning model, identifying an object classification is performed at least in part by another machine learning model, identifying one or more temporal events is performed at least in part by another machine learning model, and tracking each object is performed at least in part by another machine learning model.

In one aspect, a method of tracking a dynamic physical environment can include obtaining perception data from one or more perception capture hardware devices including: one or more cameras, one or more depth sensing cameras, one or more infrared cameras, and detecting a plurality of objects from the perception data. In one aspect, the detecting of the plurality of objects includes: identifying an object classification of each of the plurality of objects, tracking each object of the plurality of objects in the environment, and localizing each object of the plurality of objects in the environment. In one aspect, the method includes identifying one or more temporal events in the environment associated with each object of the plurality of objects. In one aspect, the method includes generating one or more event associations based on the object classifications of each of the plurality of objects, the one or more temporal events, the tracking of each object of the plurality of objects in the environment, or a combination thereof. In one aspect, at least one of identifying an object classification and identifying the one or more temporal events is performed by a machine learning model using a convolutional neural network and recurrent neural network.

In one aspect, a computer-implemented method of tracking an environment can include receiving perception data of a retail facility having a plurality of objects and one or more users, detecting each of the plurality of objects, identifying an object classification of each of the plurality of objects detected, tracking each object of the plurality of objects in the environment, and determining a temporal state, or spatial state, or both, of the environment. In one aspect, the method can include determining a default location for each of the plurality of objects in the environment and determining, based on the temporal state, or spatial state, or both, of the environment, whether a particular object of the plurality of objects is missing, removed for check out or purchase, or misplaced from the default location of the particular object. In one aspect, the method can include identifying the object classification of each of the plurality of objects detected is based on at least in part a prior probability determination of a previous temporal state, a previous spatial state, or both of the environment. In one aspect, the method can include comparing the temporal state of the environment with the previous temporal state, and the spatial state of the environment with the previous spatial state of the environment, and determining a store state change in retail environment.

In one aspect, a computer system including one or more non-transitory computer-readable media storing computer-executable instructions that, when executed on one or more processors, can cause the one or more processors to perform acts including receiving a perception data of the physical environment having a plurality of objects. In one aspect, the acts can include detecting a first object based on the perception data. In one aspect, the acts can include determining a first object identity based on the first object detected. In one aspect, the acts can include determining a confidence level of the first object identity. In one aspect, the acts can include comparing the confidence level of the first object identity with a threshold level. In one aspect, the acts can include displaying visually, in response to the comparing of the confidence level of the first object identity with the threshold level, the first object identity to a user for a review process. In one aspect, the acts can include receiving a confirmation or a rejection of the first object identity from the user performing the review process.

In one aspect, the acts can include detecting a false negative event from the determining of the first object identity based on the first object detected and the perception data. In one aspect, the acts can include determining a second object identity based on the first object detected and determining a second confidence level. In one aspect, the acts can include displaying, visually, in response to the comparing of the confidence level of the first object identity with the threshold level, the first object identity and the second object identity to the user for a review process, and receiving a selection of either the first object identity or the second object identity or a rejection of both the first object identity and the second object identity from the user performing the review process. In one aspect, the acts include displaying at least a point of interaction wherein the first objected detected based on the perception data is highlighted through s pixel level semantic segmentation. In one aspect, the acts include categories comprising a human, a customer, a non-customer human, a shelf, an inventory unit, mobile devices, background of the environment, or a combination thereof.

In one aspect, the acts include sending an information associated with the confirmation or rejection of the first object identity into a training set of a machine learning system that tracks and localizes objects, temporally and spatially, in an environment.

In one aspect, the machine learning system outputs data that improves a level of accuracy of determining a confidence level of an object identity.

In one aspect, the confidence level is visually displayed as a percentage to the user for the review process.

Other embodiments are directed to systems and computer readable media associated with methods described herein.

A better understanding of the nature and advantages of embodiments of the present invention may be gained with reference to the following detailed description and the accompanying drawings.

### BRIEF DESCRIPTION OF THE DRAWINGS

The accompanying drawings, which are included to provide further understanding and are incorporated in and constitute a part of this specification, illustrate disclosed embodiments and together with the description serve to explain the principles of the disclosed embodiments. In the drawings:
FIG. 1 is a schematic illustration of a computer system for tracking an environment to certain aspects of the present disclosure.
FIG. 2A is a schematic illustration of a computer system for tracking an environment to certain aspects of the present disclosure.
FIG. 2B shows an additional schematic illustration of the computer system for tracking an environment to certain aspects according to that of FIG. 2A.
FIG. 3 illustrates a flow chart of an example process for tracking an environment in accordance with various aspects of the subject technology.
FIG. 4 illustrates an additional flow chart of an example process for tracking an environment in accordance with various aspects of the subject technology.
FIG. 5 illustrates an additional flow chart of an example process for tracking an environment in accordance with various aspects of the subject technology.
FIGS. 6A-B illustrate flow charts of example processes for tracking an environment in accordance with various aspects of the subject technology.

### DETAILED DESCRIPTION

### I. EXEMPLARY ENVIRONMENT TRACKING

In this specification, reference is made in detail to specific embodiments of the invention. Some of the embodiments or their aspects are illustrated in the figures. For clarity in explanation, the system has been described with reference to specific embodiments, however it should be understood that the system is not limited to the described embodiments. On the contrary, the system covers alternatives, modifications, and equivalents as may be included within its scope as defined by any patent claims. The following embodiments of the system are set forth without any loss of generality to, and without imposing limitations on, the claimed method. In the following description, specific details are set forth in order to provide a thorough understanding of the present method. The present method may be practiced without some or all of these specific details. In addition, well known features may not have been described in detail to avoid unnecessarily obscuring the system.

In addition, it should be understood that steps of the exemplary system and method set forth in this exemplary patent can be performed in different orders than the order presented in this specification. Furthermore, some steps of the exemplary system and method may be performed in parallel rather than being performed sequentially.

One system and method improves and optimizes the efficiency of a dynamic physical environment by integrating a fully automated object tracking system for tracking and managing the dynamic physical environment.

### A. Exemplary System

The following specification describes a computer-implemented method and computer systems for tracking an environment.

In one example, the computer-implemented system, program, and method for tracking a dynamic physical environment includes using a video and sensing pipeline infrastructure. The video and sensing pipeline can include perception hardware involving a range of sensors such as, but not limited to, cameras, lidars, depth sensors, infrared (IR) sensors, weight sensors to collect data on activity happening in an indoor physical space. These sensors can be connected to a central processing unit located in the store that connects the sensors to the rest of the processing stack.

In one example, the video pipeline transports data from the perception hardware and the data is sent to a perception stack. The data is used to determine actors in a scene, such as, but not limited to human movers. The data is also used to identify actions that the actors are performing, such as but not limited to picking up objects, observing the object or objects, putting objects back or in another physical location in the physical environment, or placing the items on the actors or a container owned by the actor.

In one example, a system and a computer-implemented method enables brick and mortar stores to accelerate the purchase process and reduce operational overhead of maintaining a retail environment. In one example, the environment can be a retail environment for cashierless shopping where one or more customers enter and exit the retail environment, remove, and checkout items in the retail environment.

In one example, the method for object tracking can increase accuracy and reduce error rates in detecting motions around the physical environment, which can improve security in managing the physical environment by better detecting any stealing of items or attempt of stealing.

### 1. System Architecture

The following describes a system architecture configured to track a dynamic physical environment according to one aspect of the invention.

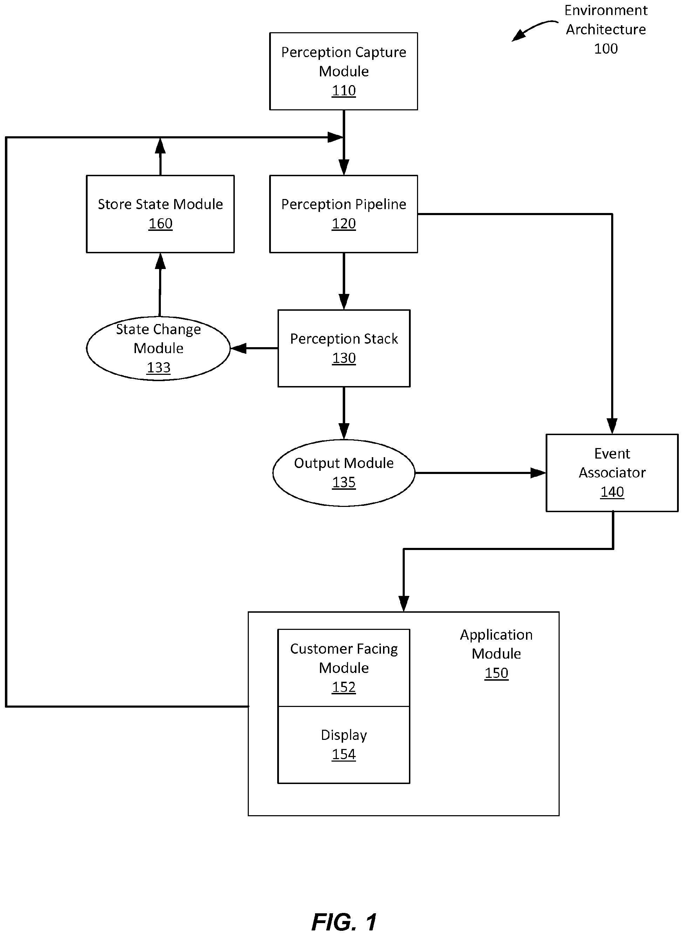

FIG. 1 illustrates an exemplary schematic diagram of a system architecture for an environment. As illustrated in FIG. 1, an environment architecture 100 is provided. The environment architecture 100 can be a computer implemented system including computer hardware and computer software to implement and monitor the environment architecture 100. In one example, the environment architecture 100 can be that of a store, specifically, a retail store. The retail store can include items or stock keeping units (SKUs) typically found in a convenience store such as food, beverages, stationary, etc. The retail store can also include larger retail items such as electronics, clothes, hardware, etc., or smaller retail items such as jewelry or accessories. The environment architecture 100 can implement computer hardware and computer software to maintain and track a retail environment. In one example, the environment architecture 100 implements and maintains a cashierless retail facility implementing a cashierless check-in and check-out system.

In one example, as illustrated in FIG. 1, the environment architecture 100 includes a perception capture module 110, a perception pipeline 120, a perception stack 130 or perception stack module, the perception stack 130 including a state change module 133 and output module 135. The environment architecture 100 also includes an event associator 140, an application module 150, a store state module 160, and a store activity 170.

In one example, the perception capture module 110 can include computer hardware, or imaging hardware, or both, to capture and sense an environment, such as that of a retail environment. The perception capture module 110 can include hardware such as cameras (e.g., RGB cameras), depth sensing cameras (e.g., RGB-D or RGBD cameras), light detection and ranging (LiDAR) sensors, infrared (IR sensors), radar for sensing the physical environment and capturing image and video data of the physical environment. In one example, the perception hardware can be located in locations in the retail environment to minimize noise to sensor signal data with regards to the space. In one example, perception hardware can be placed on ceilings of the retail environment while other sensors can be placed on shelves either at a front side of the shelves facing customers or a back side of the shelves facing customers or SKUs. RGB cameras capture visual information within a scene. RGB-D cameras capture depth information. LiDAR captures 3D data point to create a point cloud representation of the space. And IR sensors capture heat and depth information. In one example, the output of the perception stack is an interpretable perception data (i.e. for RGB-D, a depth map along with RGB images would be the output). In one example, the perception hardware sensors are fixed about a location and axis. In one example, perception data can include imaging data obtained from cameras for visual information of objects and scenes in the environment. Perception data can include 3D data captured by LiDARs to create a point cloud representation of the space. And perception data can include depth data from IR sensors and LiDARs.

The perception capture module 110 is configured to collect sensing and image data and transport the perception data via a perception pipeline 120. Perception data is processed and moved through the perception pipeline 120. In one example, the perception pipeline 120 is configured to allow the flow of information from various sensors into the subsystems of the cashier-less checkout system, such as the perception data. The perception pipeline 120 can include a low-level computer program that connects to the cameras and sensing hardware, performs decoding, and performs synchronization of input sources based on any data source timestamp, estimated timestamp, and/or visual features of the input source's data frame. The timestamp can be approximated by a packet read time. Reading, decoding, data manipulation, and synchronization in real-time is achieved via hardware acceleration. In one example, in addition to processing the input sources, the pipeline can store the perception data in key-value storage to ensure availability of the data, and reduce memory consumption. In one example, all input sources of the perception data can be saved to a file system for use as subsequent training data. The perception pipeline 120 can also perform additional caching for redundancy in the event of system failure, allocates and manages local and cloud resources, orchestrates how other subsystems start and connect to the environment architecture 100, and transfers input data and output data between components of the environment architecture 100.

In one example, the perception pipeline 120 sends perception data from the perception capture module 110 to a perception stack 130. The perception stack 130 is configured to detect and track objects, actors, and determine whether actions or events took place in the retail environment.

In one example, the perception stack 130 uses a combination of algorithms including but not limited to probabilistic graphical models, generative models, and discriminative machine learning models including neural networks to detect, identify, and track actors in a scene. The perception stack 130 also localizes actors to regions in the physical environment in order to identify where actors are performing actions. In one example, the perception stack uses another set of machine learning models to determine which specific objects each actor is interacting with. The determination is performed through a combination of object detection and Bayesian inference.

In one example, the perception stack 130 can include three components, the object detector, the temporal event detector and object tracker. Using the three components, the perception stack 130 detects and classifies items, actors, and backgrounds of the retail environment and determines events and store states of the retail environment.

In one example, the perception stack 130 can generate a plurality of outputs at different timesteps. At every timestep, the object detector outputs an array of object detections in formats that include, but are not limited to, bounding boxes, voxels, point clouds, and object masks. The temporal event detector takes in a sequence of frames from the perception data. If the temporal event detector detects events, such as the taking of an item on a shelf to a bag of the customer, the perception stack 130 outputs a localization data in the form of bounding boxes, voxels, point clouds, or object masks along with a label output describing the event type as well as the time ranges for the events taking place. The object tracker tracks objects from first detection to last detection and resolves identity errors (including missed detections and identity switches).

In one example, the final outputs of the perception stack 130 are either store state changes, or temporal events. The outputs of the perception stack 130, depending on the type and information associated with the outputs, are sent to either an event associator 140 via an output module 135 or a state change module 133. In the event that there was a state change of the environment, the perception stack 130 sends an output associated with the state change through the state change module 133 to a store state module 160. The data from the store state module is then passed into the perception pipeline 120 downstream such that the output module 135 and event associator 140 are able to incorporate updates to the state of the store when making perception related decisions.

In one example, an event associator 140 receives outputs from the perception stack 130 via the output module 135 and combines the data and information from the outputs with information about the actor including an actor's profile. The combined data can be used to determine actions and events happening in the store such as when an actor has checked out an item from the shelf to the actor's person or a shopping container such as a bag, basket, or cart.

In one example, the events and actions determined by the event associator 140 are sent to an application module 150 including a customer facing module 152 and display 154. The display 154 can be a user-facing interactive display on a mobile device or tablet, such as a graphical user interface ("GUI").

In one example, the application module 150 is configured to allow a customer to interact with the environment architecture 100of a cashierless shopping system via the customer facing module 152 and display 154. In one example, an interaction can include a check in first interaction, where the customer identifies herself before the moving inside the retail environment. This allows the cashierless system to identify the customer and associate events particularly with the customer. In one example, an interaction can include a check-in with a time and place interaction, where the customer can identify herself any time the customer is in the environment. In one example, an interaction can include an expedited checkout. In the expedited checkout, when a customer is finished shopping, the customer can interact with the customer facing module 152 when she is finished shopping to identify herself to the environment architecture 100 and finalize her one or more transactions. When the user interacts with the application module 150, the information generated by application module, along with perception information from near the physical location of the application module 150, i.e. the front or entrance area of a store where the customer is standing near a mobile device having the application module 150 and performing an action is then sent to the pipeline, which is then forwarded to the perception pipeline 120 and temporal event associator 140.

In one example, the application module 150 is a customer facing application embedded in a device that includes hardware and computer programs that enable customers to interact with the environment architecture 100 and enable the environment architecture 100 to identify and profile the customer. In one example, the identification can be determined by receiving and identifying a payment method, phone number of the customer, email, or biometric information of the customer.

In one example, a customer facing hardware can include a tablet with a payment terminal. The tablet can have a payment processing device to accept card-based and NFC-based transactions. The customer facing hardware can enable the environment architecture 100 to associate a shopping session with a customer. This association can occur with a payment method or a customer facing application. When using a payment method such as a credit card, debit card, or a loyalty or bonus card is used, the environment architecture 100 associates the payment method with the shopping session. In this case, the hardware receives payment information, and communicates with a cloud-based server to create an account. This account is associated with the in-store-server's shopping session for the customer.

In one example, application module 150 can include a customer facing application such as a mobile application on a customer's phone. On the application, customers can create an account and add payments methods. The application enables customers to search for stores that use a cashierless payment system implemented by the environment architecture 100, search through the store's products, associate the customer's account with a shopping session, review the customer's receipts, and dispute any items on their receipt. In one example, when a dispute is created, the perception data for that shopping session is manually reviewed to resolve the dispute. The customer facing application can use a number of methods to communicate the customer's account to the in-store-server including QR-codes, the camera of the customer's mobile phone, and/or wireless communication methods such as Wi-Fi, Bluetooth, or NFC. With a QR code, the customer can scan her QR at the customer facing hardware. With the mobile phone's camera, the customer would scan an identifier displayed on the customer facing hardware. Bluetooth or Wi-Fi can be used to seamlessly identify a start of a session or checkout of a session without requiring the customer to explicitly take action.

The store state module 160 can then receive information on store state changes such as detections of items missing or being placed elsewhere and/or a change in item or stock count and send the information of such store state change through the perception pipeline 120 to the event associator 140. In response to any information from the store state change module 160, the event associator sends the data to the application module 150 that the user interacts with including any final receipts gathered. The data sent to the application module 150 can be portrayed in a text form to the user to reflect any interactions the user had with the store or to indicate a transaction event.

### 2. Perception Architecture

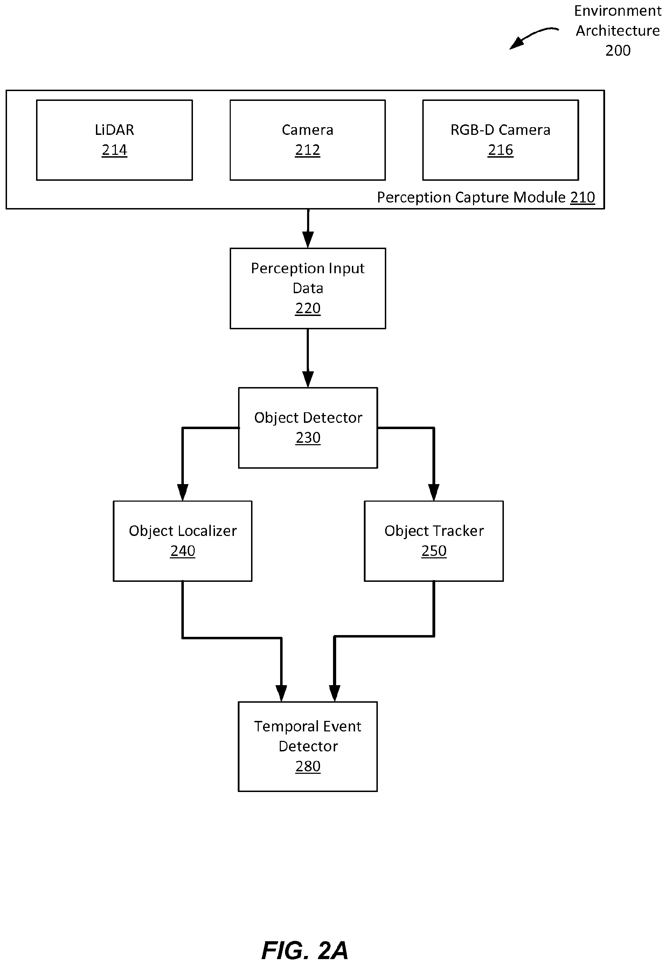

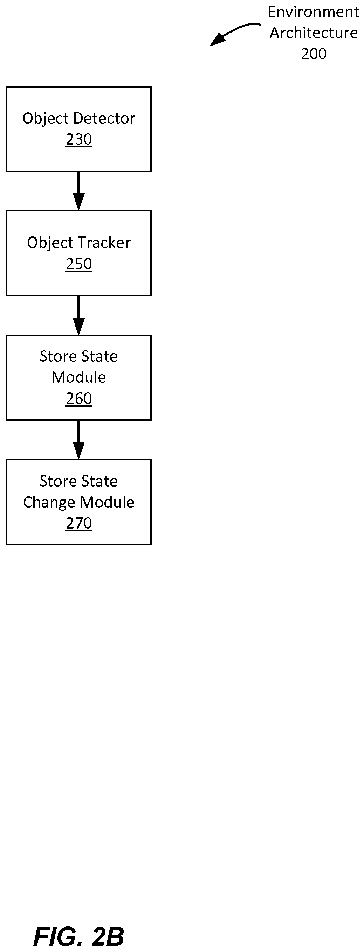

FIG. 2A and 2B illustrate example schematic illustrations of an environment architecture with a perception stack similar to that of the perception stack of FIG. 1. In FIG. 2A, an environment architecture 200 includes a perception capture module 210. The perception capture module 210 includes a camera 212, an RGB-D camera 216 and a LiDAR module 214. The perception capture module 210 captures video, image, and ranging data from a retail environment and sends the data as perception input data to a perception stack having an object detector 230, object tracker 250, object localizer 240, and temporal event detector 280.

The object detector 230 uses a machine learning model including, for example, a convolutional neural network and a recurrent neural network that is trained with data and descriptions of items within a store and descriptions and profiles of a wide dataset of shoppers. The object detector 230 can spatiotemporally detect where in the retail environment the customer interactions happen and localize objects. The object detector 230 detects customers and the items they are interacting with through a combination of visual, depth, and 3d cloud point-based modalities. The object detector 230 is trained using domain transfer few shot learning approaches in order to set up the system fast. In one example, the object detector 230 detects objects from the perception data and identifies an object classification of each object detected including actors, customers, items of the retail environment, or other items. The object detection not only uses convolutions to detect objects in real time, but also performs occlusional reasoning using Bayesian inference to ascertain the presence of objects under occlusion using prior perception output. The object detector 230 detects objects and classifies the objects into classifications such as specific items of the retail environment, actors, customers, and other items.

The object tracker 250 uses a combination of filtering, flow based and deep association-based techniques to track objects (either items customers interact with or customers themselves) within the retail space. When the object tracker is tracking customers, it uses recurrent memory and a customer database to re-identify customers in order to ensure the object tracking works even if the system loses sight of a customer.

The object localizer 240 uses camera geometry and perception data from the sensors to localize objects in a 3d space.

The temporal event detector 280 uses convolutional and recurrent neural networks to identify when specific events are happening within the view of each sensor based on the detection and classification of an object by the object detector 230 and tracked and localized by the object localizer 240 and object tracker 250. The temporal event detections detect events including, but not limited to, shopper-to-shelf and shopper-shopper interactions such as reaching to shelf, taking products from shelf, inspecting product, walking in front of shelf, suspicious behavior and shopper communication. The temporal event detector 280 can be performed by using a combination of frame level action detections combined with the motion of each actor within a scene. Frame level actions are identified using the convolutional and recurrent neural networks trained on datasets of shoppers shopping in simulated and real settings. The motion of each actor is captured through motion vectors computed directly from the perception hardware.

The output of the temporal event detector 280 can be sent to an event associator module like event associator 140 of FIG. 1.

### B. Store State Tracking

As illustrated in FIG 2B, an environment architecture 200 can include an object detector 230 and object tracker 250, as previously illustrated in FIG. 2A. FIG 2B also illustrates a store state module 260 which can track and store the overall state of the store as described above. The overall state of the store can determine which SKUs have moved to which location in the retail environment or determine which customers have moved and to which location. This is done by tracking based on shelves. The environment architecture, based on the perception data in real time, can determine that an item was taken from one shelf location and moved to another shelf location. If the environment architecture detects that an item was misplaced, then alerts can be sent to employees on a periodic cadence through a dashboard on an employee's version of the store app.

The store tracker also includes inventory management software to manage the store inventory. The store tracker provides a prior probability ("prior") for the object detector, particularly in scenarios where objects are not immediately resolvable by single frame, monocular vision. Based on the state of the store, which comprises inter alia the location of objects, a prior is provided that provides the prior probability that an object taken from the shelf by the actor is a certain SKU. The prior probability comprises the probability of a result prior to evidence (e.g., perception data 220) being taken into account by the algorithm. When the most recent object placed on the front of a shelf by an actor is a specific SKU, then a high prior may be assigned that the next object taken from the shelf by an actor is this specific SKU. In the absence of misplaced objects, a high prior for an object may be assigned based on the typical object stored on the relevant shelf touched by the actor. The prior influences the object detector 230 determination of the SKU identity, for example by weighting object identities prior to the introduction of additional information from the perception input data 220. For example, when state change module 133 detects that the actor places a sandwich on a shelf that typically has apples and is adjacent to shelves with bananas and candy bars, then a prior probability for SKU identity for an object from the shelf may be 75% sandwich, 15% apple, 5% banana, 2% candy bar, and so on. However, even a high prior can be overruled by a high enough confidence in a different determination by object detector 230 based on perception input data 220. Finally, if there was a store state change detected, the information of a store state change will be sent from the store state module 260 to the store state change module 270.

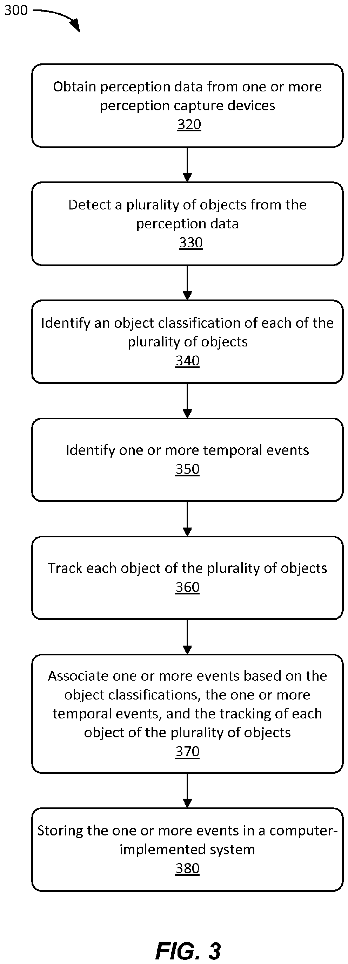

FIGS. 3-5 depicts flow diagrams of an example process of tracking a retail environment, in accordance with various aspects of the invention.

In the example flow diagram 300 of FIG. 3, at block 320, an environment architecture obtains perception data from one or more perception capture devices. At block 330, the environment architecture detects a plurality of objects from the perception data. At block 340, the environment architecture identifies an object classification of each of the plurality of objects. At block 350, the environment architecture identifies one or more temporal events. At block 360, the environment architecture tracks each object of the plurality of objects. At block 370, the environment architecture associates one or more events based on the object classifications, the one or more temporal events, and the tracking of each object of the plurality of objects. At block 380, the environment architecture stores the one or more events in a computer-implemented system.

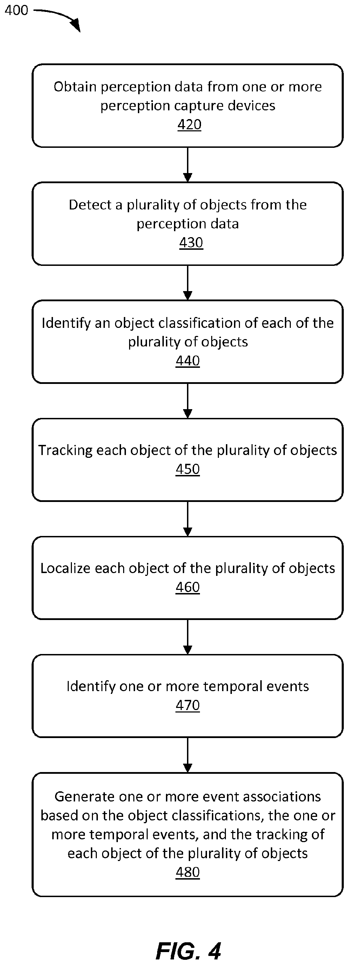

In the example flow diagram 400 of FIG. 4, at block 420, an environment architecture obtains perception data from one or more perception capture devices. At block 430, the environment architecture detects a plurality of objects from the perception data. At block 440, the environment architecture identifies an object classification of each of the plurality of objects. At block 450, the environment architecture tracks each object of the plurality of objects. At block 460, the environment architecture localizes each object of the plurality of objects. At block 470, the environment architecture identifies one or more temporal events. At block 480, the environment architecture generates one or more event associations based on the object classifications, the one or more temporal events, and the tracking of each object of the plurality of objects.

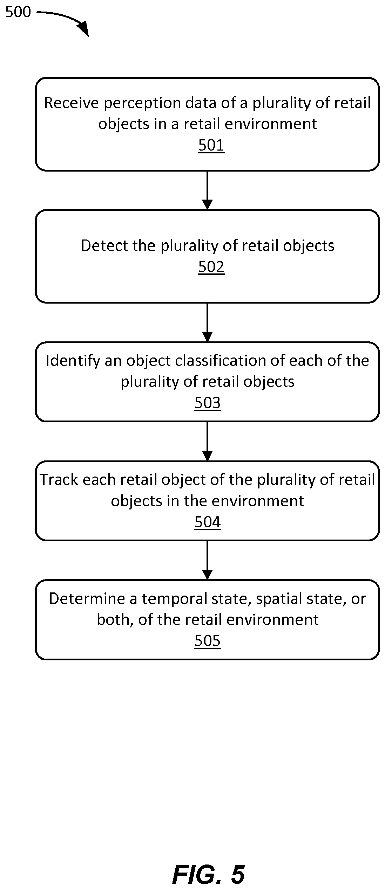

In the example flow diagram 500 of FIG. 5, at block 501, an environment architecture receives perception data of a plurality of retail objects in a retail environment. At block 502, the environment architecture detects the plurality of retail objects. At block 503, the environment architecture identifies an object classification of each of the plurality of retail objects. At block 504, the environment architecture tracks each retail object of the plurality of retail objects in the environment. At block 505, the environment architecture determines a temporal state, spatial state, or both, of the retail environment.

### C. Review and Training Inputs

The following example describes a scenario where the detection and classification of an object, including an item, SKU, actor, customer, or other item has a low accuracy or a low chance of accuracy. In one example, the system architecture is configured to allow a manual review of any detection, identification, and determination of an object.

In the event the computer program makes a mistake, or the computer program is not able to confidently determine a classification of an identified object, the computer program of the environment architecture can invoke a manual review process which include human beings either on or off premise. The data from such manual review can be used as training data and is added to an aggregate set to further improve the machine learning model used by the environment architecture.

In one example, the manual review process is triggered, upon a threshold, in real time such that a human reviewer can review and confirm or reject an object identification while the user associated with the event or object classification is still shopping.

In one example, when the perception stack of the environment architecture detects an object from the perception data, the perception stack further assigns a classification or identity to the object with a level of confidence. For example, the perception stack, based on the perception data, can detect that the images include a user's hand, an object, and background. The perception stack can then determine that the identity of the object in the user's hand is a beverage item and assign a level of confidence. The level of confidence may be a value between 0 and 1 indicating the confidence as a probability value. In one example, if the level of confidence does not meet a certain threshold, a manual review will be automatically triggered and sent to a user, for example an employee, contractor, crowd-sourced agent, or other person, that has her own application module connected to the current environment architecture. At this moment, the application module will display the object with the level of confidence and ask the user to accept that the object classified is the same as what the user herself identifies the object to be or reject that the classification and her assessment matches. In one example, the user can receive the review information remotely. This method enables the reviewer to easily interpret the perception data by displaying to the reviewer visualizers, descriptions, visually displaying the confidence levels or other contextual information such as store layout, product planograms, nearby customers, previous interactions, or a combination thereof. This method enables a retail system to guarantee 100% accuracy while optimizing the amount of time needed for review.

In one example, a human reviewer interacts with the perception data using tooling to verify and/or correct the predictions of the retail system. The predictions do not limit to the detection and identification or classification of objects. The predictions can be any determinations by the retail system including actions by any actors in the scene of the retail environment, or quantities of an item taken at a time rather than the identity of the item itself, etc.

In one example, the environment architecture, when triggered by not meeting a confidence threshold, can display to a user multiple potential classifications of the object detected. In one example, each of the potential classifications of the object include its own confidence level and are displayed to the user. The confidence levels may, in some embodiments, sum to 1 or a number less than 1. The user may tap to select one of the potential classifications, or reject all of the classifications and deem that the classification is wrong and unresolved or manually inputting the correct classification.

In one example, a second reviewer can be requested to review the detection and classification of an object, event, quantity, etc. Once the environment architecture has received multiple confirmations, selections, or rejections in the same manner by different users, the environment architecture can consider the reviewed prediction selections as the correct interpretation of the object detected. In some embodiments, a threshold number of reviewers is required to agree on the correct classification of the object for the system to accept the classification. In the event that the review happens during a live shopping session, the reviewed selection and determination of the reviewable object will be considered final and the incidence of the review will be identified in the customer's receipt.

In one example, the review process can be initiated by the perception stack in real-time during the shopping session or can happen at a different time. The review can review the detection and classification of an object or temporal event when the confidence level of the detection or classification are low, or the system triggers a false negative detection.

In one example, depending on which part of the perception stack subsystem (object detection, object tracking, temporal event detection), outputs data to by reviewed, the input to the review may be sequences of images or videos along with associated confidences. The review user interface to the reviewer can display the customer identification which is generated from the perception stack. For example, if the condition for a review was triggered by the object detector having too low confidence in detecting or identifying the object, the application module may display a single image or a plurality of different angled images that the perception stack used to detect and classify the object. On the other hand, if the condition for a review was triggered by the temporal event detector identifying a certain gesture that had too low of a confidence level, the application module may display a video that the perception stack used to detect and classify the gesture.

For example, if the perception stack detects a temporal event such as the placing of an item from the shelf to the user's shopping container, such that the confidence level of characterizing the temporal even as placing an item in shopping container does not meet a certain threshold, a video can be presented to a user to manually watch the motion and determine the correctly identified temporal event. In one example, on a relevant portion of a video depicting a temporal event below a certain threshold is presented to the reviewer. The video or clip of video can be presented in a way to highlight any regions of interest for the reviewer, allowing the reviewer to view the point of interest of the temporal event more easily and quickly.

In one example, the environment architecture can display to a reviewer suggested confidences and keyboard shortcuts in order to accelerate review times. The shortcuts enable reviewers to quickly scrub through the sequence of frames, or to quickly make selections or undo incorrect selections. The system also provides machine learning aided tools such as pixel level semantic segmentation suggesting a point of interaction between the customer and the object a customer is interacting with to ensure that the reviewer is able to correctly qualify the receipt. The pixel level semantic segmentation classifies each of a plurality of pixels on the screen with one or more predicted categories. The segmentation categories may include, customer, shelf, shelf object, interaction shelf object and other objects (such as mobile phones/wallets). The tool can also help reduce the cognitive load on the reviewer by suggesting areas of focus. The semantic segmentation may also reduce cognitive load by greying out (again using semantic segmentation) anything in the view that is not the current customer or point of interaction the reviewer is dealing with.

For example, if the review is for an object detected and identified with low confidence, the environment architecture can send an image of a scene with the object detected, having the object in the image semantically segmented and greying out all other portion of the image that is not the object itself. The semantically segmented object of interest may be highlighted in a different color or displayed in different way, such as with a bounding box. Therefore, the object is highlighted which helps optimize the reviewing process for the user when the user knows exactly which pixels in the image needs to be reviewed for accuracy.

For example, when a user picks up a sandwich item from the retail environment, the perception stack may detect and object and identify that the item picked up is a sandwich. However, in the event that in this particular scenario, the perception stack could only assign a 50% confidence level to the identity of sandwich, a review process will be initiated. In the review process, the application module may display the frame image of the scene with a pixel-level semantic segmentation and visually highlight the detected object in the scene. The application module can also visually display a sandwich icon or image with the confidence level associated with the sandwich identity. The application can also visually display a second and third potential identification of the object each with a level of confidence. For example, the application can visually display a banana with a 30% confidence level and an apple with a 15% confidence level. Once the review sees the actual highlighted image of the scene, the user can select which of the three choices was the correct depiction of the object, or reject all of the choices and leave the detection unknown or manually input the correct identification.

The review system can also pool reviews from multiple reviewers by sending review requests to multiple reviewers at the same time. If one reviewer misses a detection/makes an error, it is possible for the system architecture to detect the mistaken selection and trigger an additional review.

In one example, the review system also functions as part of the machine learning training pipeline. Reviews collected from human beings are used as training data for models that output the frames into the review system. This training data is stored as a sequence of annotated videos in which people, events, and objects are spatially and temporally localized. The training data may include the perception input data and the annotations may be attached as ground truth labels for positive training examples. Training data comprising negative training examples may also be synthesized by accepting positive training examples and changing the ground truth labels to an incorrect label. The training data may be used to train models such as but not limited to perception stack 130, object detector 230, object localizer 240, object tracker 250, temporal event detector 280, and event associator 140. The further training of the models may render it less likely that human review is needed in future examples.

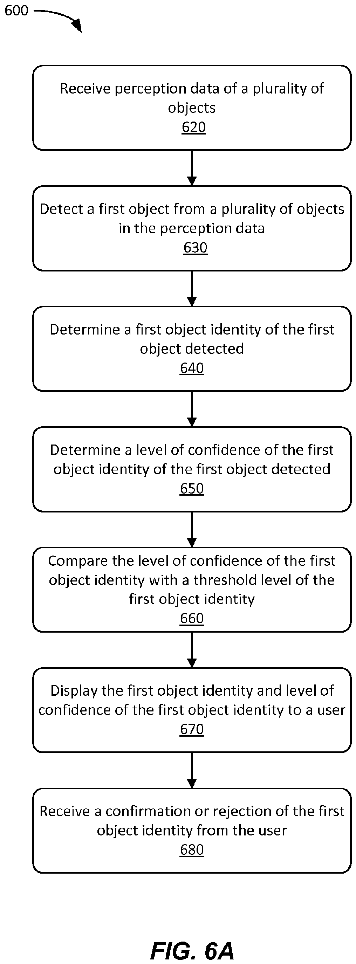

In the example flow diagram 600 of FIG. 6A, at block 620, an environment architecture receives perception data of a plurality of objects. At block 630, the environment architecture detects a first object from a plurality of objects in the perception data. At block 640, the environment architecture determines a first object identity of the first object detected. At block 650, the environment architecture determines a level of confidence of the first object identity of the first object detected. At block 660, the environment architecture compares the level of confidence of the first object identity with a threshold level of the first object identity. At block 670, the environment architecture displays the first object identity and level of confidence of the first object identity to a user. At block 680, the environment architecture receives a confirmation or rejection of the first object identity from the user.

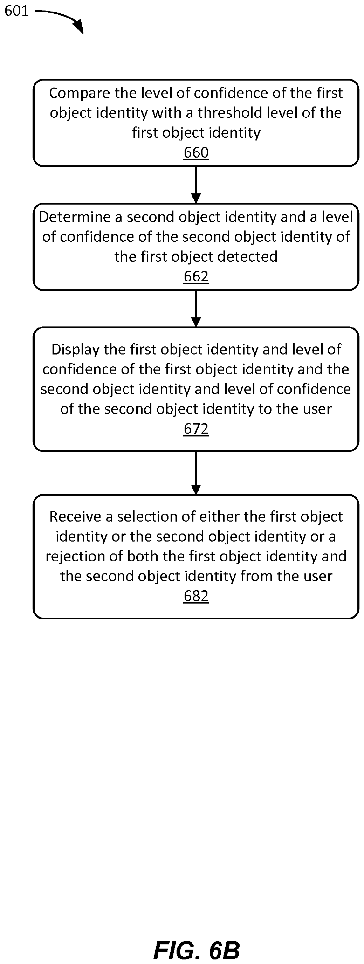

In the example flow diagram 601 of FIG. 6B, at block 660, the environment architecture compares the level of confidence of the first object identity with a threshold level of the first object identity. At block 662, the environment architecture determines a second object identity and a level of confidence of the second object identity of the first object detected. At block 672, the environment architecture displays the first object identity and level of confidence of the first object identity and the second object identity and level of confidence of the second object identity to the user. At block 682, the environment architecture receives a selection of either the first object identity or the second object identity or a rejection of both the first object identity and the second object identity from the user.

In this specification, reference is made in detail to specific embodiments of the invention. Some of the embodiments or their aspects are illustrated in the drawings.

For clarity in explanation, the invention has been described with reference to specific embodiments, however it should be understood that the invention is not limited to the described embodiments. The invention covers alternatives, modifications, and equivalents as may be included within its scope as defined by any patent claims. The following embodiments of the invention are set forth without any loss of generality to, and without imposing limitations on, the claimed invention. In the following description, specific details are set forth in order to provide a thorough understanding of the present invention. The present invention may be practiced without some or all of these specific details. In addition, well known features may not have been described in detail to avoid unnecessarily obscuring the invention.

In addition, it should be understood that steps of the exemplary methods set forth in this exemplary patent can be performed in different orders than the order presented in this specification. Furthermore, some steps of the exemplary methods may be performed in parallel rather than being performed sequentially. The present invention may be practiced with different combinations of the features in each described configuration

The terminology used herein is for the purpose of describing particular aspects only and is not intended to be limiting of the disclosure. As used herein, the singular forms "a," "an," and "the" are intended to comprise the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While the invention has been particularly shown and described with reference to specific embodiments thereof, it should be understood that changes in the form and details of the disclosed embodiments may be made without departing from the scope of the invention. Although various advantages, aspects, and objects of the present invention have been discussed herein with reference to various embodiments, it will be understood that the scope of the invention should not be limited by reference to such advantages, aspects, and objects. Rather, the scope of the invention should be determined with reference to patent claims.

## Claims

1. A computer-implemented method of a tracking an environment, the method comprising:
obtaining perception data from one or more perception capture hardware devices and one or more perception programs;
detecting a plurality of objects from the perception data;
identifying an object classification of each of the plurality of objects;
identifying one or more temporal events in the environment;
tracking each object of the plurality of objects in the environment; and
associating one or more events based on the object classifications of each of the plurality of objects, the one or more temporal events, the tracking of each object of the plurality of objects in the environment, or a combination thereof.

2. The method of claim 1 further comprising:
receiving user input by an application, the application configured to associate the user entering, browsing, leaving, or a combination thereof, for conducting a shopping session including the user checking into the environment to initiate the shopping session and the user checking out of the environment having obtained one or more stock keeping units and concluding the shopping session.

3. The method of claim 1 or 2 further comprising localizing each object in 3D space of the environment.

4. The method of any preceding claim further comprising:
receiving a plurality of data on one or more users
detecting one or more users in the environment;
associating a new profile or an existing profile with each of the one or more users based on the plurality of data on the one or more users.

5. The method of any preceding claim further comprising localizing a geographic location of the one or more users in a 3D space of the environment.

6. The method of any preceding claim wherein detecting a plurality of objects is performed at least in part by a first machine learning model, identifying an object classification is performed at least in part by a second machine learning model, identifying one or more temporal events is performed at least in part by a third machine learning model, and tracking each object is performed at least in part by a fourth machine learning model.

7. A computer system comprising one or more non-transitory computer-readable media storing computer-executable instructions that, when executed on one or more processors, cause the one or more processors to perform acts comprising:
receiving a perception data of the physical environment having a plurality of objects;
detecting a first object based on the perception data;
determining a first object identity based on the first object detected;
determining a confidence level of the first object identity;
comparing the confidence level of the first object identity with a threshold level;
displaying, visually, in response to the comparing of the confidence level of the first object identity with the threshold level, the first object identity to a user for a review process; and
receiving a confirmation or a rejection of the first object identity from the user performing the review process.

8. The computer system of claim 7 wherein the computer-executable instructions, when executed on one or more processors, cause the one or more processors to perform acts further comprising detecting a false negative event from the determining of the first object identity based on the first object detected and the perception data.

9. The computer system of clam 7 or 8 wherein the computer-executable instructions, when executed on one or more processors, cause the one or more processors to perform acts further comprising determining a second object identity based on the first object detected and determining a second confidence level.

10. The computer system of claim 9 wherein the computer-executable instructions, when executed on one or more processors, cause the one or more processors to perform acts further comprising:
displaying, visually, in response to the comparing of the confidence level of the first object identity with the threshold level, the first object identity and the second object identity to the user for a review process; and
receiving a selection of either the first object identity or the second object identity or a rejection of both the first object identity and the second object identity from the user performing the review process.

11. The computer system of claim 7 wherein displaying, visually, the first object identity to the user includes displaying at least a point of interaction wherein the first objected detected based on the perception data is highlighted through a pixel level semantic segmentation.

12. The computer system of claim 11 wherein the perception data is received from a retail environment and the semantic segmentation data includes categories comprising a human, a customer, a non-customer human, a shelf, an inventory unit, mobile devices, background of the environment, or a combination thereof.

13. The computer system of any one of claims 7 to 12 wherein the computer-executable instructions, when executed on one or more processors, cause the one or more processors to perform acts further comprising sending an information associated with the confirmation or rejection of the first object identity into a training set of a machine learning system that tracks and localizes objects, temporally and spatially, in an environment.

14. The computer system of claim 13 wherein the machine learning system outputs data that improves a level of accuracy of determining a confidence level of an object identity.

15. The computer system of any one of claims 7 to 14 wherein the confidence level is visually displayed as a percentage to the user for the review process.
